# EUROPÄISCHE PATENTSCHRIFT

(11) **EP 1 127 496 B1**
(45) Veröffentlichungstag und Bekanntmachung des Hinweises auf die Patenterteilung: **19.05.2004**
(21) Anmeldenummer: 00103568.2
(22) Anmeldetag: 19.02.2000
(51) Int. Cl.: A23L 1/31, A23L 1/315

(54) **Verfahren zum Herstellen eines panierten Fleischproduktes**
Method of producing a breaded meat product
Procédé pour la fabrication d'un produit pané à base de viande

(43) Veröffentlichungstag der Anmeldung: 29.08.2001
(73) Patentinhaber: Wiesenhof Geflügel-Kontor GmbH, 49429 Visbek (DE)
(72) Erfinder:
(74) Vertreter: Patentanwälte Hauck, Graalfs, Wehnert, Döring, Siemons, Schildberg

(56) Entgegenhaltungen:
- CA-A- 2 101 474
- DE-A- 19 624 329
- GB-A- 2 336 517
- US-A- 4 877 629
- US-A- 4 940 590
- US-A- 5 265 525
- US-A- 5 908 648

## Beschreibung

Die Erfindung bezieht sich auf die Herstellung eines panierten Fleischproduktes.

Das Panieren ist eine bekannte Technik, Fleisch oder andere Nahrungsmittel mit einer Kruste zu versehen, die aus Mehl, Semmelbrösel, Ei und gegebenenfalls Gewürzen oder anderen Zutaten bestehen kann siehe z.B. US-A-5 908 648. Die Kruste kann verschiedene Funktionen haben. Zunächst wird hierzu das Fleisch durch eine brotähnliche Beilage ergänzt. Hierdurch kann der verhältnismäßig teure Fleischanteil verringert werden. Ferner kann die Kruste den Biß des Produktes verändern bzw. diesem ein interessantes Erscheinungsbild geben. Eine weitere Funktion ist die Beeinflussung des Garvorganges, indem die Kruste einen direkten Kontakt mit der Wärmequelle verhindert. Die Kruste kann aber auch ganz einfach dazu dienen, das verwendete Fleisch abzudecken. Panierte Fleischprodukte basieren deshalb häufig auf minderwertigem Fleisch, insbesondere auf zerkleinertem Fleisch.

Aus den vorstehenden Gründen werden panierte Fleischprodukte häufig als Imbißwaren oder als Convenience-Food hergestellt. Dabei ist es von besonderem Interesse, daß die panierten Fleischprodukte eine ansprechende Optik und günstige Zubereitungs-, Verzehrs- und Gebrauchseigenschaften haben.

Davon ausgehend liegt der Erfindung die Aufgabe zugrunde, ein Verfahren zum Herstellen eines panierten Fleischproduktes mit einer ansprechenden Optik und günstigen Zubereitungs-, Verzehrs- und Gebrauchseigenschaften zur Verfügung zu stellen.

Die Aufgabe wird durch ein Verfahren mit den Merkmalen des Anspruches 1 gelöst. Vorteilhafte Ausgestaltungen des Verfahrens sind in den Unteransprüchen angegeben.

Das erfindungsgemäße Verfahren zum Herstellen eines panierten Fleischproduktes umfaßt die folgenden Schritte:
1.1 Stücke Fleisch werden in einer Trommel trocken bemehlt oder trocken paniert,
1.2 danach werden die Stücke Fleisch naß paniert,
1.3 danach werden die Stücke Fleisch trocken paniert oder trocken bemehlt,
1.4 danach werden die Stücke Fleisch erneut naß paniert,
1.5 danach werden die Stücke Fleisch erneut in einer Trommel trocken bemehlt oder trocken paniert,
1.6 die Stücke Fleisch werden relativ zueinander und/oder bezüglich einer Unterlage bewegt, wobei dies
   1.6.1 zwischen Schritt 1.1 und 1.2 und/oder
   1.6.2 nach Schritt 1.5 geschieht, und
1.7 die Stücke Fleisch legen nach mindestens einem der vorgenannten Schritte eine Fallhöhe zurück.

Durch diese Abfolge von trockenen Bemehlungs- oder Panierungsschritten in einer Trommel und nassen Panierungsschritten sowie zwischen- bzw. nachgeordneten Bewegungs- und Fallschritten wird ein rundliches Fleischprodukt mit vollständig panierter Oberfläche mit einer besonderen Riffelstruktur (oder "Shrinklestruktur") der Kruste erreicht. Dieses Fleischprodukt hat ein besonders ansprechendes Erscheinungsbild, das dem von Popcorn nahe kommt, und günstige Zubereitungs-, Verzehrs- und Gebrauchseigenschaften. Es ist insbesondere für den Imbiß und Convenience-Bereich geeignet. Um das Fleischprodukt für Transport, Lagerung und die abschließende Zubereitung vorzubereiten, wird es vorzugsweise nach den vorerwähnten Schritten fritiert und/oder tiefgefroren.

Durch die Behandlung des Fleisches in den Trommeln wird eine gleichmäßige Mehl- oder Panadenverteilung erreicht und zusätzlich ein Zusammenkleben der verschiedenen Stücke verhindert. Auch trägt diese Behandlung zu der vorteilhaften Riffelstruktur der Kruste und der im allgemeinen runden Form des Fleischproduktes bei.

Das Bewegen der Stücke Fleisch relativ zueinander und/oder bezüglich einer Unterlage dient ebenfalls dazu, zusammenklebende Stücke zu trennen, zu vereinzeln und rundlich zu formen. Auch hierdurch wird die Oberflächenstruktur vorteilhaft beeinflußt. Vorzugsweise geschieht dies mittels mindestens einer Vorrichtung mit einem oder mehreren bewegten Fingern, die auf die Stücke Fleisch einwirken. Diese Vorrichtung kann mindestens einen Finger haben, der durch Drehen um eine zu diesem etwa parallele Achse bewegbar ist. Der eine oder die mehreren Finger der Vorrichtung können von einer Scheibe vorstehen, die um eine zu dem mindestens einen Finger etwa parallele Achse drehbar ist. Ferner können die Achsen des einen oder der mehreren Finger etwa senkrecht zu einer Unterlage ausgerichtet sein, auf der sich die Stücke Fleisch befinden. Dabei kann es sich bei der Unterlage insbesondere um ein Transportband handeln.

Maßgeblich für die Beeinflussung der Struktur der Oberfläche ist auch das Zurücklegen mindestens einer Fallhöhe, wobei die Stücke von einer Ausgangsposition auf eine Unterlage herunterfallen. Der Einfluß dieser Behandlung auf die Oberflächengestalt des Produktes kann um so ausgeprägter sein, je später dieser Schritt innerhalb des Gesamtverfahrens durchgeführt wird.

Vorzugsweise werden dem Verfahren Stücke gewachsenen Fleisches zugeführt. Dabei handelt es sich im Unterschied zu Formfleischerzeugnissen gemäß den Leitsätzen des deutschen Lebensmittelbuches (Fleisch und Fleischerzeugnisse) um Fleisch, das so beschaffen ist, wie es am Körper des Tieres gewachsen ist, insbesondere hinsichtlich Aussehen, Zusammensetzung, Struktur und Geschmack. In den Leitsätzen des deutschen Lebensmittelbuches (Fleisch und Fleischerzeugnisse) sind in Abschnitt 2.5 spezielle Fleischteilstücke angegeben, die gewachsenes Fleisch sind und auch als "Fleisch am Stück" bezeichnet werden. Dem Verfahren können insbesondere Stücke Filetfleisch zugeführt werden, wobei es sich insbesondere um Stücke Hähnchenfilet oder Hähnchenbrustfilet handeln kann. Weiterhin vorzugsweise können dem Verfahren ganze Stücke gewachsenen Fleisches zugeführt werden. Grundsätzlich kann das Verfahren jedoch auch auf der Grundlage von in kleinere Einheiten geschnittenem oder zerkleinertem gewachsenen Fleisch oder von Formfleisch durchgeführt werden.

Das dem Verfahren zugeführte Fleisch kann mariniert sein, um die Konsistenz (z.B. die Zartheit des Fleisches) zu verbessern bzw. den Geschmack zu verändern (z.B. durch Würzen).

Die dem Verfahren zugeführten Stücke Fleisch können insbesondere flache Stücke mit Abmessungen von etwa 4 x 4 mm bis 50 x 50 mm sein. Insbesondere können die Abmessungen etwa 9 x 9 mm betragen. Die Fallhöhe kann insbesondere im Bereich von 0,02 bis 0,2 m liegen, vorzugsweise im Bereich von 0,4 bis 0,6 m. Bei einer bevorzugten Ausführung kann die Fallhöhe etwa 0,06 m betragen.

Vorteilhaft werden die Stücke Fleisch im kontinuierlichen Durchlauf verarbeitet, um eine Durchfeuchtung und Verklebung und eine nachfolgende Austrocknung zu verhindern. Außerdem können im kontinuierlichen Prozeß große Durchsatzmengen erzielt werden.

Weitere Einzelheiten und vorteilhafte Wirkungen der Erfindung ergeben sich aus der nachfolgenden Beschreibung der anliegenden Zeichnungen, die eine Vorrichtung zur Durchführung des Verfahrens zeigen. In den Zeichnungen zeigen:

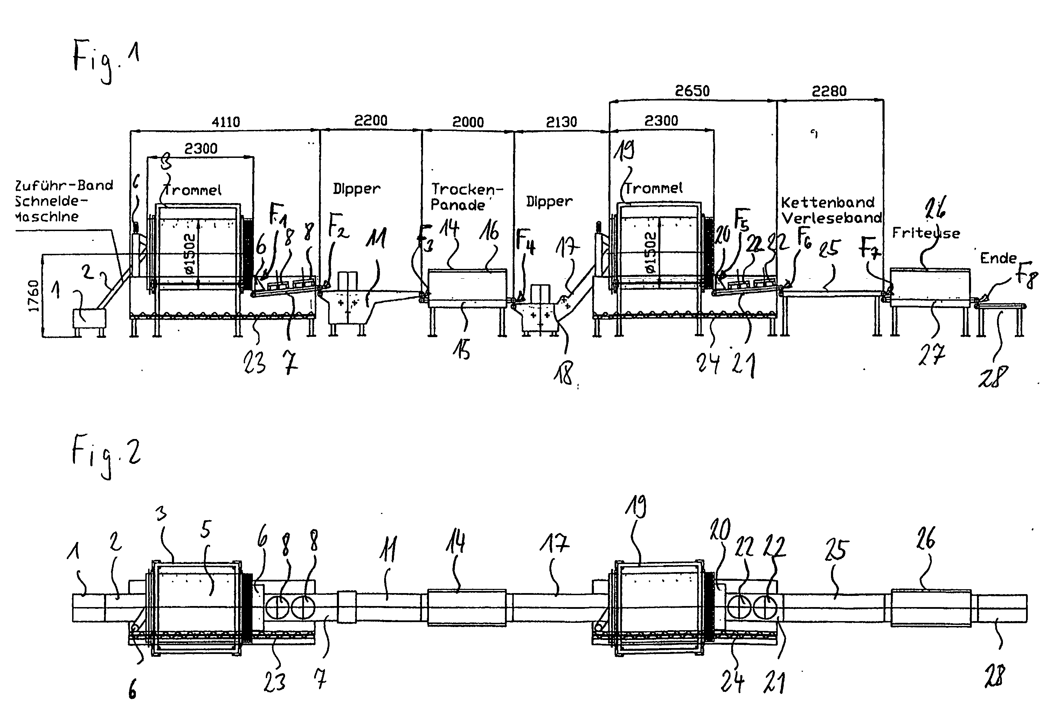

- Fig. 1: die Vorrichtung in Seitenansicht;
- Fig. 2: dieselbe Vorrichtung in der Draufsicht;

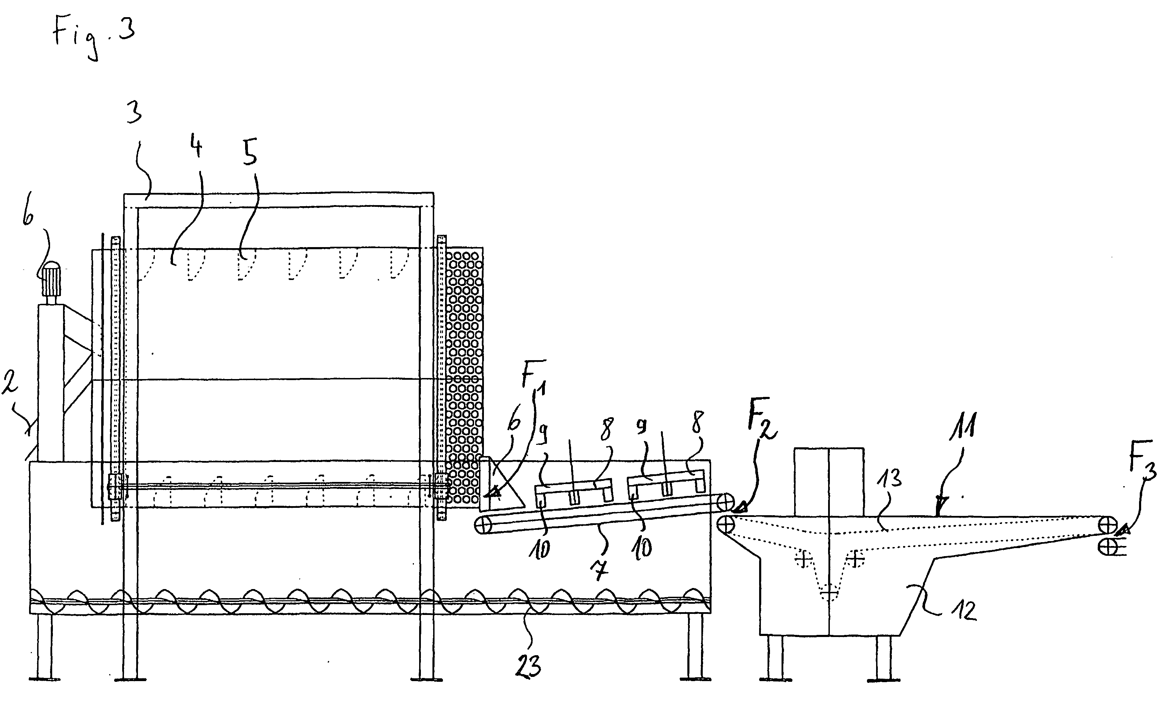

- Fig. 3: eine Trommel mit einer nachgeordneten Fingervorrichtung und einem nachgeordneten Dipper derselben Vorrichtung in vergrößerter Seitenansicht.

Die gezeigte Vorrichtung arbeitet kontinuierlich und wird nachfolgend in Durchlaufrichtung der zu behandelnden Stücke Fleisch beschrieben:

Ausgehend von einer Schneidemaschine 1 zum Kleinschneiden des Fleisches (hier insbesondere Hähnchenfilets) in Stücke geeigneter Größe (hier etwa 9 x 9 mm) werden die Stücke Fleisch über ein Zuführband 2 einer Trommel 3 zugeführt. Dabei handelt es sich um eine Vorrichtung, die einen um eine horizontale Achse drehbaren Trommelbehälter 4 mit Einbauten 5 am Innenumfang aufweist. Der Trommelbehälter 4 wird mittels eines Elektromotors 6 in Drehung angetrieben.

In das eine Ende des Trommelbehälters 4 werden über das Zuführband 2 die Stücke Fleisch eingegeben. Im Trommelbehälter 4 werden sie von den Einbauten 5 angehoben und axial transportiert. Dabei findet eine Bemehlung statt mit einem Mehl, das ebenfalls in den Trommelbehälter 4 eingegeben wird.

Nachdem die Stücke Fleisch den Trommelbehälter 4 axial durchwandert haben und dabei bemehlt worden sind, treten sie am anderen Ende aus. Mittels einer Aufgabevorrichtung 6 werden sie auf ein leicht ansteigendes Transportband 7 aufgegeben. Dabei legen sie eine Fallhöhe F₁ zurück.

Dem oberen Trumm des Transportbandes 7 sind zwei Vorrichtungen mit bewegten Fingern 8 zugeordnet. Diese haben jeweils eine kreisscheibenförmige Platte 9, die um eine senkrecht zum Transportband 7 ausgerichtete Mittelachse drehangetrieben ist. Parallel zur Drehachse sind in einem Abstand von dieser eine Vielzahl von Fingern 10 an der Unterseite der jeweiligen Platte 9 angeordnet. Die Finger 10 enden kurz vor der Oberseite des oberen Trumms des Transportbandes 7. Durch Drehen der Platte 9 werden die Finger 8 bewegt. Nach der Aufgabe durch die Aufgabevorrichtung 6 wird das Fleisch vom Transportband 7 unter den Vorrichtungen 8 mit den um die Mittelachse der Platte 9 drehenden Fingern 8 hindurch transportiert, wobei die Stücke Fleisch bewegt, voneinander getrennt und durchmischt werden.

Am anderen Ende des Transportbandes 7 fallen die Stücke Fleisch über eine Fallhöhe F₂ auf einen Dipper 11. Genauer gesagt fallen sie auf das obere Trumm eines durch einen trogartigen Behälter 12 des Dippers 11 geführten Transportbandes 13. Von dem oberen Trumm des Transportbandes 13 werden die Stücke Fleisch durch den Oberbereich des Troges 12 transportiert, der mit einer Naßpanade gefüllt ist. Dabei handelt es sich um ein mittels Wasser verdünntes Mehl, das Gewürze oder andere Zutaten umfassen kann.

Am Ende des Transportbandes 13 fallen die naß panierten Stücke Fleisch über eine weitere Fallhöhe F₃ in eine Trockenpaniervorrichtung 14. Sie fallen auf das obere Trumm eines Transportbandes 15 dieser Vorrichtung, von dem sie durch eine Kammer 16 derselben transportiert werden. In der Kammer 16 rieselt von oben eine Trockenpanade herab, die auf der Basis von Mehl hergestellt ist, um eine Trockenpanierung der Stücke Fleisch herbeizuführen. Die Trockenpanade bildet unten in der Kammer etwa auf der Höhe des oberen Trumms des Förderbandes 15 ein Panierbett, das die Trockenpanierung der hindurchgeführten Stücke Fleisch vervollkommnet. Die Zuführmenge der Trockenpanade der Trockenpaniervorrichtung 14 ist einstellbar bzw. regelbar und überdies kann eine Rückführung vorhanden sein, um überschüssige Trockenpanade aus dem Panierbett der Aufgabe für die Berieselung mit Trockenpanade erneut zuzuführen.

Wenn die Stücke Fleisch das andere Ende des Transportbandes 15 erreicht haben, fallen sie über eine weitere Fallhöhe F₄ in einen weiteren Dipper 17, in dem auf die zuvor anhand des Dippers 11 beschriebene Weise eine weitere Naßpanierung durchgeführt wird. Der Dipper 17 hat ein Transportband 18, das in eine weitere Trommel 19 hochgeführt ist, die entsprechend der zuvor beschriebenen Trommel 3 aufgebaut ist.

In der Trommel 19 findet eine weitere Trockenbemehlung statt.

Aus dem Ausgang der Trommel 19 wird das stückige Fleisch über eine Zuführeinrichtung 20 auf ein oberes Trumm eines Transportbandes 21 gegeben, wobei es eine Fallhöhe F₅ zurücklegt. Dem Transportband 21 sind wiederum zwei Vorrichtungen 22 mit bewegten Fingern zugeordnet, die wie oben beschrieben arbeiten.

Unterhalb der beiden Anordnungen aus Trommel 3 bzw. 19 und Transportband 7 bzw. 21 befindet sich jeweils eine Transportschnecke 23 bzw. 24, die Teil einer Rückführung für herunterfallendes Mehl vom Ausgang der Trommel 3 bzw. 19 bzw. vom Transportband 7 bzw. 21 zum Eingang der Trommel 3 bzw. 19 ist.

Vom Ende des Transportbandes 21 fallen die Stücke Fleisch über eine Fallhöhe F₆ auf ein Verleseband 25, das für eine manuelle oder automatische Qualitätsprüfung dient.

Vom Ende des Verlesebandes 25 fallen die Stücke Fleisch über eine Fallhöhe F₇ in eine Friteuse 26, in der die Stücke Fleisch im Durchlauf fritiert werden. Dafür hat die Friteuse 26 eine Kammer, durch die ein Transportband 27 verläuft, das die Stücke Fleisch durch erhitztes Fett transportiert.

Vom Ende des Transportbandes 27 fallen die Stücke Fleisch über eine Fallhöhe F₈ auf ein weiteres Transportband oder Tisch 28, um der Verpackung und einem Froster zugeführt zu werden.

Die Transportbänder sind als engmaschige Gliederbänder ausgeführt, deren Maschenweite so klein gewählt ist, daß das Produkt, das hier mit einer Größe von 9 x 9 mm bereitgestellt wird, nicht hindurchfallen kann.

Das resultierende Fleischprodukt hat eine vollständig panierte Oberfläche mit interessanter Riffelstruktur, die dem von Popcorn ähnelt. Es läßt sich einfach durch Fertiggaren zubereiten. Ähnlich wie Popcorn kann es in die Hand genommen und beispielsweise als kleiner Imbiß verzehrt werden. Dabei kann ein brotartiger Geschmacksanteil durch die Panade gesteuert werden. Deren Gewichtsanteil am fertigen Fleischprodukt kann insbesondere 25 bis 55 Gew.-% betragen.

## Patentansprüche

1. Verfahren zum Herstellen eines panierten Fleischproduktes mit folgenden Schritten:
1.1 Stücke Fleisch werden in einer Trommel trocken bemehlt oder trocken paniert,
1.2 danach werden die Stücke Fleisch naß paniert,
1.3 danach werden die Stücke Fleisch trocken paniert oder trocken bemehlt,
1.4 danach werden die Stücke Fleisch erneut naß paniert,
1.5 danach werden die Stücke Fleisch erneut in einer Trommel trocken bemehlt oder trocken paniert,
1.6 die Stücke Fleisch werden relativ zueinander und/oder bezüglich einer Unterlage bewegt, wobei dies
1.6.1 zwischen Schritt 1.1 und 1.2 und/oder
1.6.2 nach Schritt 1.5 geschieht, und
1.7 die Stücke Fleisch legen nach mindestens einem der vorgenannten Schritte eine Fallhöhe zurück.

2. Verfahren nach Anspruch 1, dem Stücke gewachsenen Fleisches zugeführt werden.

3. Verfahren nach Anspruch 2, dem ganze Stücke gewachsenen Fleisches oder Abschnitte davon zugeführt werden.

4. Verfahren nach Anspruch 2 oder 3, dem Stücke Filetfleisch zugeführt werden.

5. Verfahren nach Anspruch 4, dem Stücke Hähnchenfilet zugeführt werden.

6. Verfahren nach einem der Ansprüche 1 bis 5, dem flache Stücke Fleisch mit Abmessungen von etwa 4 x 4 mm bis 50 x 50 mm zugeführt werden.

7. Verfahren nach einem der Ansprüche 1 bis 6, dem mit einer Flüssigmarinade marinierte Stücke Fleisch zugeführt werden.

8. Verfahren nach einem der Ansprüche 1 bis 7, bei dem die Stücke Fleisch mittels mindestens einer Vorrichtung mit mindestens einem bewegten Finger relativ zueinander und/oder bezüglich einer Unterlage bewegt werden.

9. Verfahren nach Anspruch 8, bei dem der mindestens eine Finger der Vorrichtung mit mindestens einem bewegten Finger um eine zur Achse des mindestens einen Fingers parallele Achse gedreht wird.

10. Verfahren nach Anspruch 8 oder 9, bei dem der mindestens eine Finger von einer Platte vorsteht, die um eine zu dem mindestens einen Finger etwa parallele Achse drehbar ist.

11. Verfahren nach Anspruch 10, bei dem die Achse, um die Platte drehbar ist, zwischen den Achsen mehrerer Finger angeordnet ist.

12. Verfahren nach einem der Ansprüche 8 bis 11, bei dem die Achse des mindestens einen Fingers etwa senkrecht zur Unterlage ausgerichtet sind.

13. Verfahren nach einem der Ansprüche 1 bis 12, bei dem die Stücke Fleisch nach Schritt 1.5 oder Schritt 1.6.2 auf einem Verleseband transportiert werden.

14. Verfahren nach einem der Ansprüche 1 bis 13, bei dem die Stücke Fleisch nach Schritt 1.5 oder Schritt 1.6.2 oder Schritt 11 fritiert werden.

15. Verfahren nach einem der Ansprüche 1 bis 14, bei dem die Stücke Fleisch zwischen Schritt 11 und Schritt 12 eine Fallhöhe zurücklegen.

16. Verfahren nach einem der Ansprüche 1 bis 15, bei dem die mindestens eine Fallhöhe etwa 0,02 bis 0,2 m beträgt.

17. Verfahren nach Anspruch 16, bei dem die mindestens eine Fallhöhe etwa 0,04 bis 0,1 m beträgt.

18. Verfahren nach einem der Ansprüche 1 bis 17, bei dem schließlich die Fleischstücke tiefgefroren werden.

19. Verfahren nach einem der Ansprüche 1 bis 18, bei dem die Stücke Fleisch im kontinuierlichen Durchlauf verarbeitet werden.

## Claims

1. A method of producing a breaded meat product, comprising the following steps:
1.1 Pieces of meat are floured in a dry condition or breaded in a dry condition in a drum,
1.2 said meat pieces are breaded in a wet condition subsequently,
1.3 said meat pieces are breaded in a dry condition or floured in a dry condition subsequently,
1.4 said meat pieces are re-breaded in a wet condition subsequently,
1.5 said meat pieces are re-floured in a dry condition or re-breaded in a drum subsequently,
1.6 said meat pieces are moved relative to each other and/or with respect to a support, which is accomplished
1.6.1 between steps 1.1 and 1.2 and/or
1.6.2 after step 1.5, and
1.7 said meat pieces pass through a height of fall after at least one of the aforementioned steps.

2. The method according to claim 1 to which pieces of grown meat are supplied.

3. The method according to claim 2 to which whole pieces of grown meat or portions thereof are supplied.

4. The method according to claim 2 or 3 to which pieces of fillet meat are supplied.

5. The method according to claim 4 to which pieces of fillets of young chicken are supplied.

6. The method according to any one of claims 1 to 5 to which flat pieces of meat are supplied the dimensions of which are from about 4 x 4 mm to 50 x 50 mm.

7. The method according to any one of claims 1 to 6 to which pieces of meat are supplied which are marinated with a marinade.

8. The method according to any one of claims 1 to 7 wherein the pieces of meat are moved relative to each other and/or with respect to a support by means of at least one device having at least one moved finger.

9. The method according to claim 8 wherein the at least one finger of the device is rotated by at least one moved finger about an axis parallel to the axis of the at least one finger.

10. The method according to claim 8 or 9 wherein the at least one finger projects from a plate which is rotatable about an axis approximately parallel to the at least one finger.

11. The method according to claim 10 wherein the axis about which the plate is rotatable is disposed between the axes of several fingers.

12. The method according to any one of claims 8 to 11 wherein the axis of the at least one finger is oriented approximately perpendicular to the support.

13. The method according to any one of claims 1 to 12 wherein the pieces of meat are conveyed on a picking belt after step 1.5 or step 1.6.2.

14. The method according to any one of claims 1 to 13 wherein the pieces of meat are deep-fried after step 1.5 or step 1.6.2 or step 11.

15. The method according to any one of claims 1 to 14 wherein the pieces of meat pass through a height of fall between step 11 and step 12.

16. The method according to any one of claims 1 to 15 wherein the at least one height of fall is about 0.02 to 0.2 m.

17. The method according to claim 16 wherein the at least one height of fall is about 0.04 to 0.1 m.

18. The method according to any one of claims 1 to 17 wherein the meat pieces are finally deep-frozen.

19. The method according to any one of claims 1 to 18 wherein the pieces of meat are processed in a continuous pass.

## Revendications

1. Procédé pour la fabrication d'un produit pané à base de viande avec les étapes suivantes :
1.1 des morceaux de viande sont enfarinés à sec ou panés à sec dans un tambour,
1.2 les morceaux de viande sont panés par voie humide,
1.3 les morceaux de viande sont panés à sec ou enfarinés à sec,
1.4 les morceaux de viande sont de nouveau panés par voie humide,
1.5 les morceaux de viande sont de nouveau enfarinés à sec ou panés à sec dans un tambour,
1.6 les morceaux de viande sont déplacés les uns par rapport aux autres et / ou par rapport à un support, sachant que cela s'effectue
1.6.1 entre les étapes 1.1 et 1.2 et/ou
1.6.2 après l'étape 1.5 et
1.7 les morceaux de viande parcourent une hauteur de chute après au moins une des étapes précitées.

2. Procédé selon la revendication 1, dans lequel des morceaux de viande bruts de carcasse sont acheminés.

3. Procédé selon la revendication 2, dans lequel des morceaux de viande entiers bruts de carcasse ou des morceaux coupés sont acheminés.

4. Procédé selon la revendication 2 ou 3, dans lequel des morceaux de filet de viande sont acheminés.

5. Procédé selon la revendication 4, dans lequel des morceaux de filet de poulet sont acheminés.

6. Procédé selon l'une quelconque des revendications 1 à 5, dans lequel des morceaux de viande plats de dimensions entre environ 4 x 4 mm et 50 x 50 mm sont acheminés.

7. Procédé selon l'une quelconque des revendications 1 à 6, dans lequel des morceaux de viande marinés dans une marinade liquide sont acheminés.

8. Procédé selon l'une quelconque des revendications 1 à 7, dans lequel les morceaux de viande sont déplacés les uns par rapport aux autres et /ou par rapport à un support au moyen d'au moins un dispositif avec au moins un doigt mobile.

9. Procédé selon la revendication 8, dans lequel le au moins un doigt du dispositif avec au moins un doigt mobile est tourné autour d'un axe parallèle à l'axe du au moins un doigt.

10. Procédé selon la revendication 8 ou 9, dans lequel le au moins un doigt dépasse d'une plaque qui peut tourner autour d'un axe sensiblement parallèle au au moins un doigt.

11. Procédé selon la revendication 10, dans lequel l'axe autour duquel la plaque peut tourner est disposé entre les axes de plusieurs doigts.

12. Procédé selon l'une quelconque des revendications 8 à 11, dans lequel l'axe (les axes) du au moins un doigt est (sont) orienté(s) sensiblement perpendiculairement au support.

13. Procédé selon l'une quelconque des revendications 1 à 12, dans lequel, après l'étape 1.5 ou l'étape 1.6.2, les morceaux de viande sont transportés sur une bande de transport et de triage.

14. Procédé selon l'une quelconque des revendications 1 à 13, dans lequel, après l'étape 1.5 ou l'étape 1.6.2 ou l'étape 11, les morceaux de viande sont frits.

15. Procédé selon l'une quelconque des revendications 1 à 14, dans lequel les morceaux de viande parcourent une hauteur de chute entre l'étape 11 et l'étape 12.

16. Procédé selon l'une quelconque des revendications 1 à 15, dans lequel la hauteur de chute est d'environ 0,02 à 0,2 m.

17. Procédé selon la revendication 16, dans lequel la hauteur de chute est d'environ 0,04 à 0,1 m.

18. Procédé selon l'une quelconque des revendications 1 à 17, dans lequel les morceaux de viande sont finalement congelés.

19. Procédé selon l'une quelconque des revendications 1 à 18, dans lequel les morceaux de viande sont traités en un passage continu.
